# EUROPEAN PATENT SPECIFICATION

(11) **EP 3 279 467 B1**
(45) Date of publication and mention of the grant of the patent: **28.10.2020**
(21) Application number: 17181222.5
(22) Date of filing: 13.07.2017
(51) Int. Cl.: F03D 1/06, B64C 23/06

(54) **VORTEX GENERATORS FOR WIND TURBINE ROTOR BLADES**
WIRBELGENERATOREN FÜR WINDTURBINENLAUFSCHAUFELN
GÉNÉRATEURS DE VORTEX POUR PALES DE ROTOR D'ÉOLIENNE

(30) Priority: 05.08.2016 US 201615229295
(43) Date of publication of application: 07.02.2018
(73) Proprietor: General Electric Company, Schenectady, NY 12345 (US)
(72) Inventor: TOBIN, James Robert, Greenville, SC South Carolina 29615 (US); ALTHOFF, Nicholas Keane, Greenville, SC South Carolina 29615 (US); VOSSLER, Alexander William, Greenville, SC South Carolina 29615 (US); JOHNSON, Stephen Bertram, Greenville, SC South Carolina 29615 (US)
(74) Representative: de Rooij, Mathieu Julien

(56) References cited:
- EP-A1- 2 514 962
- EP-A1- 3 051 125
- WO-A1-2011/042528
- US-A1- 2012 151 769
- US-A1- 2014 328 687

## Description

The present disclosure relates in general to wind turbine rotor blades, and more particularly to vortex generators for wind turbine rotor blades having improved aerodynamic performance.

Wind power is considered one of the cleanest, most environmentally friendly energy sources presently available, and wind turbines have gained increased attention in this regard. A modern wind turbine typically includes a tower, a generator, a gearbox, a nacelle, and one or more rotor blades. The rotor blades capture kinetic energy of wind using known foil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

In many cases, accessory components are attached to the rotor blades of wind turbines to perform various functions during operation of the wind turbine. For example, it is known to change the aerodynamic characteristics of wind turbine rotor blades by adding protrusions or other structures (often referred to as "vortex generators") to the surface of the blade in order to increase the energy conversion efficiency during normal operation of the wind turbine by increasing the lift force of the blades while decreasing the drag force. See, for example, EP 3 051 125. The vortex generators serve to increase the attached-flow region and to reduce the detached-flow region by moving flow separation nearer the trailing edge of the blade. This is particularly desirable nearer to the blade root in order to increase the overall lift generated by the blade. In particular, the vortex generators create local regions of turbulent airflow over the surface of the blade as a means to prolong flow separation and thus optimize aerodynamic airflow around the blade contour. Conventional vortex generators are defined as "fins" or shaped structures on the suction side of the turbine blade. More specifically, many vortex generators include a flange portion with the fin extending therefrom.

The curvature of the blade surface that vortex generators attach to changes, which may require custom tooling and parts to fit every individual location on the rotor blade. Further, many vortex generators define a "step" at an interface between the flange portion and the surface of the rotor blade. In addition, installation techniques and systems for attaching conventional vortex generators can be quite expensive and time consuming, particularly for field installations. For example, typical field installation techniques require the use of attachment fixtures and significant dwell time for curing the attachment adhesives. The adhesives typically are considered hazardous materials and appropriate precautions and protective measures (both equipment and personal) must be taken.

Thus, improved vortex generators and methods of manufacturing and/or installing same would be welcomed in the art.

Various aspects and advantages of the invention will be set forth in part in the following description, or may be clear from the description, or may be learned through practice of the invention.

More specifically, the present invention, as defined by the appended claims, is provided.

In one embodiment, the protrusion member may define a non-uniform gap with either of the suction side or the pressure side of the rotor blade when installed on the rotor blade.

In another embodiment, the base portion and the protrusion member may be separate components. In such embodiments, the protrusion member may be mounted to the base portion via at least one of one or more snaps, a snap or interference fit, one or more mechanical fasteners, an adhesive, or any other suitable attachment means. In alternative embodiments, the base portion and the protrusion member may be integral components.

In further embodiments, the single polymer material may have a hardness of from about 85 Shore A to about 100 Shore A. More specifically, in one embodiment, the single polymer material may include any suitable elastomer, including but not limited to a thermoplastic material (such as an acrylic-styrene-acrylonitrile (ASA) polymer material), a thermoset material, or a rubber.

In additional embodiments, the protrusion member of the vortex generator may have one or more slits configured to enhance flexibility thereof as well as a filler material configured within or around the one or more slits so as to maintain the aerodynamic properties of the protrusion member. For example, the filler material may include an adhesive, a sealant, or any other filler material configured within the slits, as well as a snap fit component or cap configured around or overlapping the slits. It should further be understood that the vortex generator may include any of the additional features as described herein.

In still further embodiments, the rotor blade assembly may further include an attachment layer connecting the base portion of the vortex generator to either the suction side or the pressure side of the rotor blade.

In yet another aspect, the present disclosure is directed to a method for manufacturing a rotor blade. The method includes providing a blade shell mold of the rotor blade. As such, the method also includes laying up one or more fiber materials into the blade shell mold and placing at least one vortex generator base portion into the blade shell mold.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

In the drawings:
FIG. 1 illustrates a perspective view of a conventional wind turbine;
FIG. 2 illustrates a perspective view of one embodiment of a rotor blade assembly according to the present disclosure;
FIG. 3 illustrates a partial top view of another embodiment of a rotor blade assembly according to the present disclosure, particularly illustrating a plurality of vortex generators;
FIG. 4 illustrates a partial cross-sectional view of one embodiment of rotor blade assembly according to the present disclosure;
FIG. 5 illustrates a partial cross-sectional view of another embodiment of rotor blade assembly according to the present disclosure;
FIG. 6 illustrates a length-wise cross-sectional view of one embodiment of a vortex generator along a center line thereof according to the present disclosure, particularly illustrating a base portion of the vortex generator having a curvature that substantially aligns with or conforms to the contour of the blade surface of the rotor blade;
FIG. 7 illustrates a length-wise cross-sectional view of another embodiment of a vortex generator along a center line thereof according to the present disclosure mounted on a rotor blade surface, particularly illustrating a non-uniform gap between the underside of the protrusion member and the blade surface;
FIG. 8 illustrates a perspective bottom-side view of one embodiment of a vortex generator according to the present disclosure, particularly illustrating the curvature of the base portion of the vortex generator;
FIG. 9 illustrates a length-wise cross-sectional view of still another embodiment of a vortex generator along a center line thereof according to the present disclosure, particularly illustrating a base portion of the vortex generator having edges that curve downward;
FIG. 10 illustrates a length-wise side view of another embodiment of a vortex generator according to the present disclosure, particularly illustrating the protrusion member and the base portion of the vortex generator as separate components being joined via corresponding connecting features;
FIG. 11 illustrates a length-wise cross-sectional view of yet another embodiment of a vortex generator along a center line thereof according to the present disclosure, particularly illustrating a protrusion member of the vortex generator having a plurality of slits configured to enhance flexibility thereof;
FIG. 12 illustrates a bottom-side view (A) and a length-wise side view (B) of one embodiment of a vortex generator according to the present disclosure, particularly illustrating a plurality of flow channels configured in the base portion thereof;
FIG. 13 illustrates a width-wise side view of another embodiment of a vortex generator according to the present disclosure, particularly illustrating a resin port configured with the base portion thereof;
FIG. 14 illustrates a width-wise side view of yet another embodiment of a vortex generator according to the present disclosure, particularly illustrating a plurality of weep holes configured with the base portion thereof;
FIG. 15 illustrates a width-wise side view of still another embodiment of a vortex generator according to the present disclosure, particularly illustrating a plurality of weep holes configured in thin edges of the base portion thereof;
FIG. 16 illustrates a width-wise side view of a further embodiment of a vortex generator according to the present disclosure, particularly illustrating a plurality of weep holes configured in inserts that are infused with the base portion thereof; and FIG. 17 illustrates a flow diagram of embodiment of a method for manufacturing a rotor blade according to the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

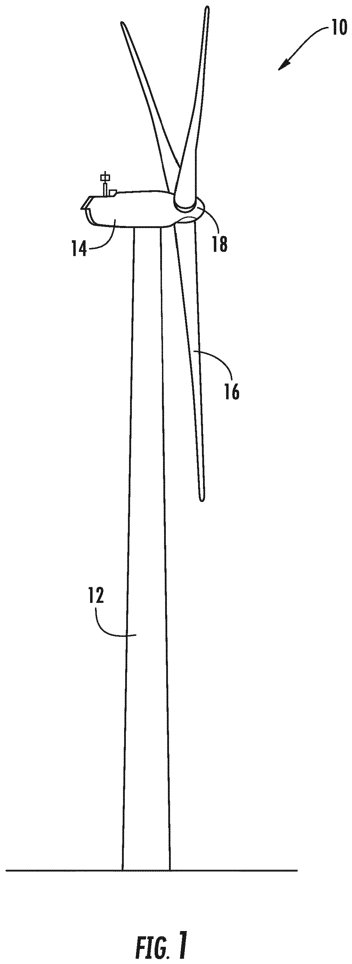

Referring now to the figures, FIG. 1 illustrates a wind turbine 10 of conventional construction. The wind turbine 10 includes a tower 12 with a nacelle 14 mounted thereon. A plurality of rotor blades 16 are mounted to a rotor hub 18, which is in turn connected to a main flange that turns a main rotor shaft (not shown). The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration.

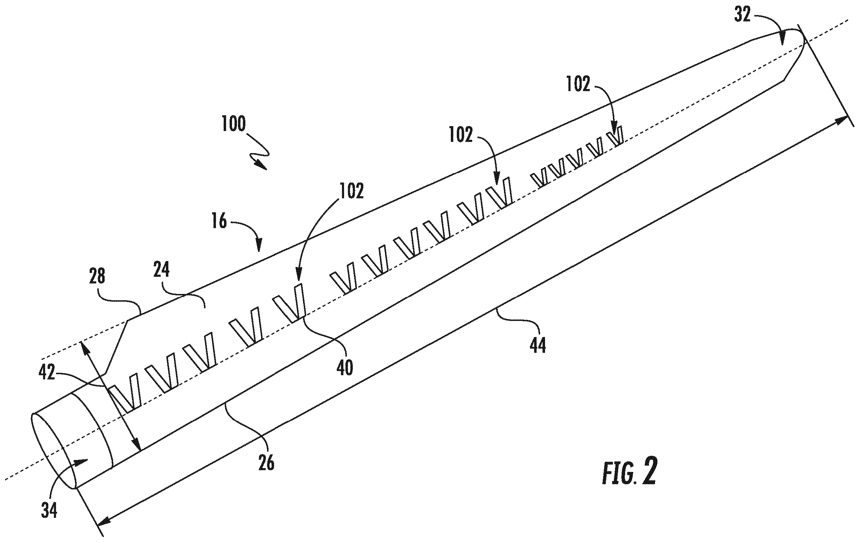

Referring to FIG. 2, a rotor blade assembly 100 in accordance with aspects of the invention is illustrated. As shown, the rotor blade assembly 100 includes a rotor blade 16 having surfaces defining a pressure side 22 and a suction side 24 extending between a leading edge 26 and a trailing edge 28. Further, the rotor blade 16 may extend from a blade tip 32 to a blade root 34. The surfaces defining the pressure side 22, the suction side 24, the leading edge 26, and the trailing edge 28 further define a rotor blade interior or cavity. Further, the rotor blade 16 defines a chord 42 and a span 44. As shown, the chord 42 may vary throughout the span 44 of the rotor blade 16. Thus, a local chord may be defined for the rotor blade 16 at any point on the rotor blade 16 along the span 44.

In some embodiments, the rotor blade 16 may include a plurality of individual blade segments aligned in an end-to-end order from the blade tip 32 to the blade root 34. Each of the individual blade segments may be uniquely configured so that the plurality of blade segments define a complete rotor blade 16 having a designed aerodynamic profile, length, and other desired characteristics. For example, each of the blade segments may have an aerodynamic profile that corresponds to the aerodynamic profile of adjacent blade segments. Thus, the aerodynamic profiles of the blade segments may form a continuous aerodynamic profile of the rotor blade 16. Alternatively, the rotor blade 16 may be formed as a singular, unitary blade having the designed aerodynamic profile, length, and other desired characteristics.

In further embodiments, the rotor blade 16 may be curved. Curving of the rotor blade 16 may entail bending the rotor blade 16 in a generally flap-wise direction and/or in a generally edgewise direction. The flap-wise direction may generally be construed as the direction (or the opposite direction) in which the aerodynamic lift acts on the rotor blade 16. The edgewise direction is generally perpendicular to the flap-wise direction. Flap-wise curvature of the rotor blade 16 is also known as pre-bend, while edgewise curvature is also known as sweep. Thus, a curved rotor blade 16 may be pre-bent and/or swept. Curving may enable the rotor blade 16 to better withstand flap-wise and edgewise loads during operation of the wind turbine 10, and may further provide clearance for the rotor blade 16 from the tower 12 during operation of the wind turbine 10.

Still referring to FIG. 2, the rotor blade 16 defines a pitch axis 40 relative to the rotor hub 18. For example, the pitch axis 40 may extend generally perpendicularly to the rotor hub 18 and blade root 34 through the center of the blade root 34. A pitch angle or blade pitch of the rotor blade 16, i.e., an angle that determines a perspective of the rotor blade 16 with respect to the air flow past the wind turbine 10, may be defined by rotation of the rotor blade 16 about the pitch axis 40.

In addition, FIG. 2 further depicts a plurality of vortex generators 102 located on the suction side 24 of the rotor blade 16 along the span 44 thereof. More specifically, in the illustrated embodiment, the vortex generators 102 are configured in pairs to define generally V-shaped formations oriented towards the leading edge 28 of the rotor blade 16. In further embodiments, the vortex generators 102 may be arranged in any suitable formation in addition to the V-shaped formation. Further, it should be understood that the vortex generators 102 are depicted on the suction side surface 24 of the blade 16 for illustrative purposes only and maybe also be provided on the pressure side surface 22.

Further, the vortex generator 102 may be placed at any location on either or both of the flow surfaces 22, 24 of the rotor blade 16 wherein it is desired to modify the aerodynamic characteristics of the surface. In a particular embodiment, the vortex generator 102 may have a different size and/or configuration depending on their spanwise location on the rotor blade 16. Moreover, as shown in FIG. 2, there are three groupings of vortex generators 102, with the grouping closest to the blade root 34 being larger (or having an overall different shape or configuration) as compared to the adjacent groupings. In alternate embodiments, all of the vortex generator 102 maybe disposed closer to a root portion 34 of the blade as compared to a tip portion 32, or closer to the tip portion 32 as compared to the root portion 34. It should be understood that the invention is not limited to any particular placement of the vortex generators 102 on either or both flow surfaces 22, 24 of the blade 16.

It should also be appreciated that the vortex generators 102 may have different shape configurations within the scope of the invention, and that the fin-type protrusion depicted in the figures is for illustrative purposes only.

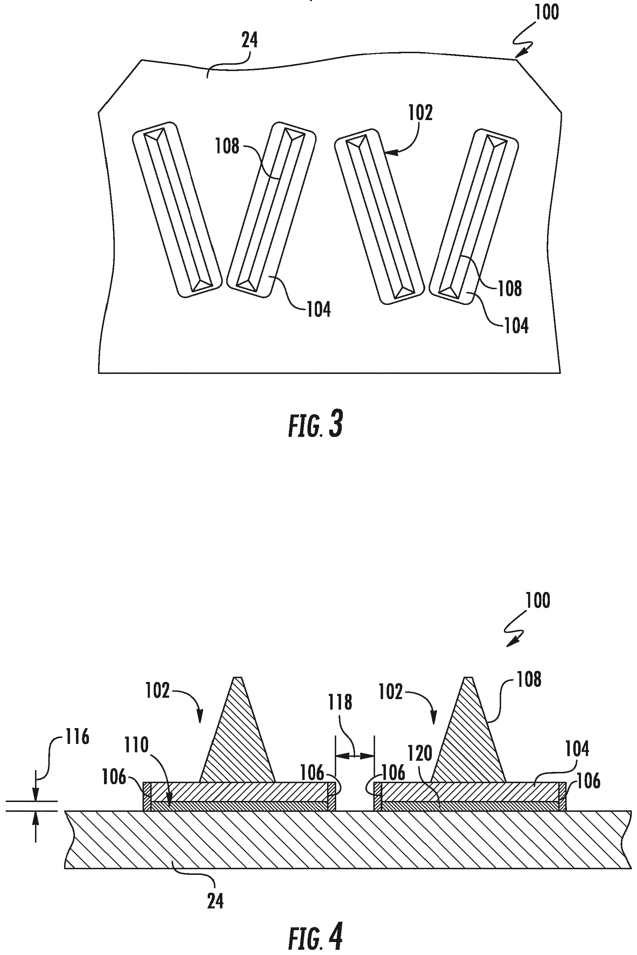

Embodiments of vortex generators 102 are depicted in FIGS. 3-12. More specifically, the vortex generators 102 of the present disclosure are preferably formed via injection-molding, the benefits of which are described herein. Further, as shown, each vortex generator 102 includes a base portion 104 and a protrusion member 108 extending upwardly from the base portion 104. More specifically, as shown in the figures in general, the vortex generators 102 include a single protrusion member 108 extending upwardly from each respective base portion 104. In further embodiments, the vortex generators 102 may include a plurality of protrusion members 108 extending upwardly from the base portion 108. As mentioned, the protrusion member 108 may be any suitable flow disrupting configuration, such as a fin, or like structure. The invention in its broadest aspects is not limited to any particular shape or configuration of vortex generator or flow disruption protrusion member 108. The base portion 104 may be defined as a generally continuous structure that presents a surface that contours and adheres to the mating blade surface.

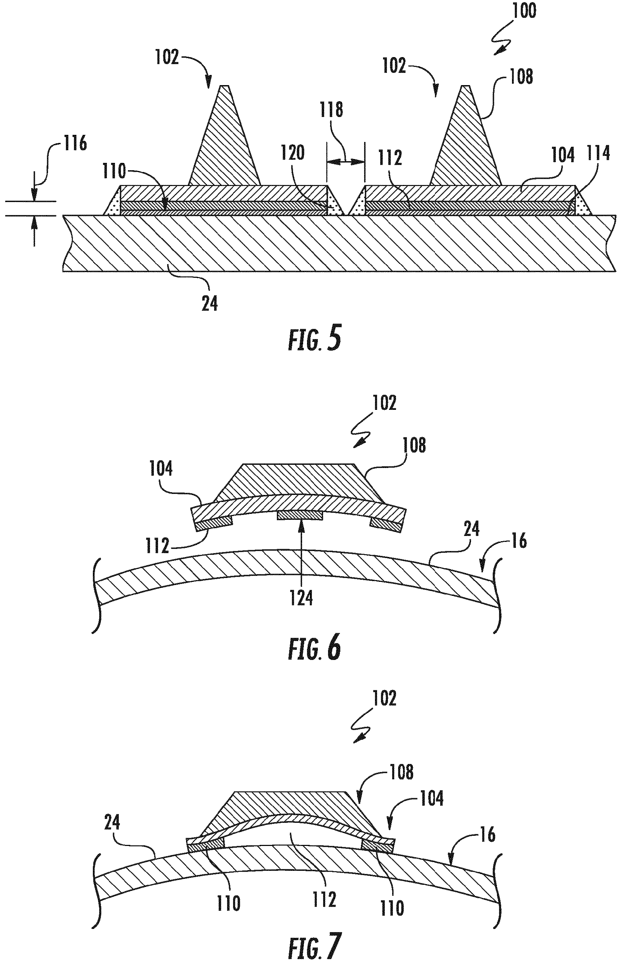

Referring particularly to FIGS. 4-6, an attachment layer 110 is configured to connect the base portion 104 of the vortex generator 102 to the respective suction or pressure side 22, 24 of the rotor blade 16. In a particular embodiment, the attachment layer 110 may be a double-sided adhesive sheet or strip material 112, such as a Very High Bond (VHB)/SAFT (Solar Acrylic Foam Tape) foam-based tape. Various examples of VHB/SAFT foam-based materials are commercially available, for example from 3M Corporation of St. Paul, Minnesota, USA. The foam attachment layer 112 will shear a small but defined amount with flexing of the underlying blade surfaces, thus reducing shear stresses in the vortex generator 102. In addition, the attachment layer 110 may be selected to have a particular thickness 116 that provides the desired shear slippage or strain isolation characteristic without adding a detrimental height aspect that could adversely affect the aerodynamic performance of the blade 16. For example, the adhesive tape may have a thickness between 0.5 mm and 5.0 mm. In addition, as shown in FIG. 5, the attachment layer 110 may include a layer of resin or putty 114 between the strip/sheet material layer 112 (such as a foam-based layer as described above) and the underlying blade surface.

In further embodiments, the attachment layer 110 may be applied as a continuous strip between the base portions 104 of adjacent vortex generators 102 and the underlying blade surface 24, or may be applied in a discontinuous pattern (e.g. as shown in FIG. 4). For example, as shown in FIG. 5, the attachment layer 110 may include a plurality of distinct strips 112 (e.g., tape or sheet strips) with a chord-wise gap 118 between adjacent strips. In other embodiments, the attachment layer 110 may include spanwise gaps between distinct strips 112. In yet another embodiment, as shown in FIG. 6, the attachment layer 110 may include double-faced adhesive tape about the periphery of the base portion 104 and an adhesive in the middle.

In addition, as shown in FIGS. 4 and 5, each of the base portions 104 may have a respective attachment layer 110 that does not span the gap 118. Thus, the gaps 118 allow for relative shear slippage between the different base portions 104. In addition, in certain embodiments, fillet seals 120 maybe provided at the edges of the respective base portions 104 to protect the attachment layer 110 from moisture or other elements. The seals 120 maybe, for example, any type of flexible caulking material.

Further, as shown in FIG. 4, the attachment layer 110 may be applied around the periphery edge 106 of the base portion 104 of the vortex generator 102. For example, as shown, high-tack adhesive may be used outside of the periphery edge 106 of the base portion 104 to provide a sealed surface to prevent squeeze out of adhesive when the vortex generator 102 is applied to the blade surface and/or when adhesive is injected in between the vortex generator 102 and rotor blade 16. In such embodiments, the periphery attachment layer 110 is not required to overlap the edge 106 of the vortex generator 102 due to the thin edges created by injection molding, which is discussed herein below. In addition, as shown, the periphery attachment layer 110 may be substantially the same thickness as the edge 106 of the base portion 104.

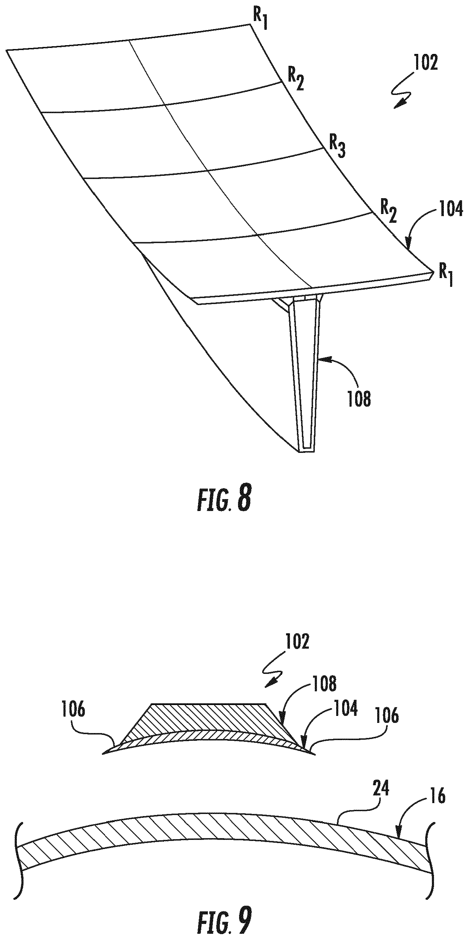

Referring now particularly to FIGS. 6-8, the base portion 104 of the vortex generator 102 may have a contour 124 in both a length-wise direction and a width-wise direction in an uninstalled state that is configured to align with a curvature of a plurality of locations of either on the suction side 24 or the pressure side 22 of the rotor blade 16. More specifically, as shown in FIG. 8, the curvature in the length-wise direction may be constant or varying, whereas the curvature in the width-wise direction may vary along a length of the protrusion member 108. For example, as shown, the radius of curvature at the edges of the base portion 104 is equal to R₁ and increases towards the center from R₂ to R₃. By applying such curvature (i.e. in either or both of the length-wise and/or width-wise directions), the base portion 104 provides flexibility for installation at multiple locations on the blade surface. In other words, as shown in FIG. 7, the base portion 104 of the vortex generator 102 is configured to conform to the blade surface, wherein the protrusion member 108 does not, thereby leaving a non-uniform gap 122 between the underside of the protrusion member 108 and the blade surface which is accounted for typically by adhesive (e.g. the attachment layer 110). More specifically, as shown, the gap varies along the length of the protrusion member 108 such that the edges of the base portion 104 contact the blade surface and the center of the base portion is separated from the blade surface by gap 122. Thus, the view of FIG. 7 is a cross-sectional view along a center line of the base portion 104. As such, the vortex generator 102 may be secured to the blade surface via an attachment layer 110 at its edges only (as shown) as well as by filling in the gap 122 with the attachment layer 110. The varying gap 122 may have any suitable height, but typically ranges from about zero millimeters (mm) at the edges of the base portion 104 to about 3 mm at the center.

The high aspect ratio protrusion member 108 of the vortex generator 102 typically does not lend itself to flexing in the direction helpful to installation on a curved blade surface. As such, the present disclosure provides an injection-molded vortex generator 102 molded from a material that is both flexible enough to conform to all desired surfaces and stiff enough to prevent the protrusion member 108 from significantly distorting from aerodynamic pressure during operation. For example, in certain embodiments, the base portion 104 and the protrusion member 108 may be constructed of a single flexible material, e.g. such as a polymer material. More specifically, in certain embodiments, the single polymer material may have a hardness of from about 80 Shore A to about 105 Shore A, more preferably about 95 Shore A. In still further embodiments, the single polymer material may have a hardness of less than 80 Shore A or greater than 105 Shore A. Further, in particular embodiments, the single polymer material may include a thermoplastic material (such as an acrylic-styrene-acrylonitrile (ASA) polymer material), a thermoset material, or a rubber.

In the event that a single flexible material cannot meet both needs (i.e. flexible enough to conform to all desired surfaces and stiff enough to prevent the protrusion member 108 from significantly distorting from aerodynamic pressure during operation), a rigid component or insert comprising the base portion 104 and one or more tines (that will eventually form the protrusion member(s) 108) can be inserted into a mold and then coated, at least partially, with a flexible coating material. More specifically, the flexible coating material may be configured at least partially around the base portion 104 and/or within or around the slit(s) between the tines. In such embodiments, the rigid component may be constructed of any suitable rigid material, such as a fiber-reinforced composite, a thermoset material, a thermoplastic material, or any other suitable rigid material. Further, the rigid material may have a hardness of greater than about 105 Shore A. Moreover, the flexible coating material may be the same material as the single polymer material as described herein or may include any other flexible material. As such, the insert may serve at least two purposes. First, the insert provides a preferred flange bottom surface for adhesive bonding purposes since many flexible polymers can be difficult to bond to with preferred MMA adhesives. Second, the insert tines serve to provide stiffness to the flexible protrusion member 108 to prevent unwanted distortion during operation, while still allowing the protrusion member 108 to flex in the desired direction to promote conformability to the blade surface when mounted thereon. In addition, the insert also may serve to reduce overall material cost by using a less expensive rigid material for the insert to reduce volume of a potentially more expensive flexible material with UV resistance.

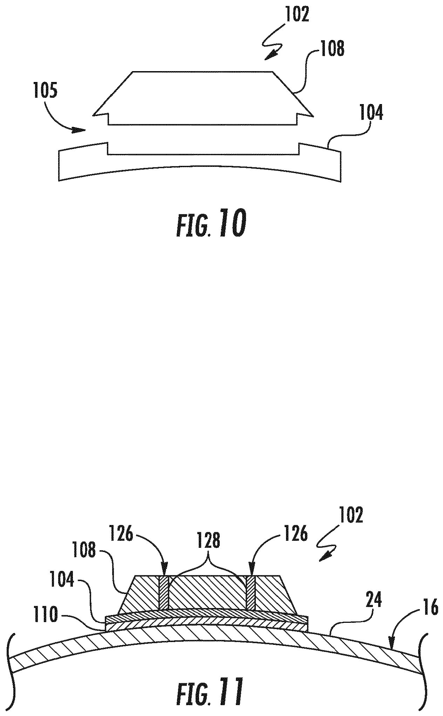

Functional components, such as the protrusion member 108, may be formed integral with the base portion 104, or separately attached to the base portion 104. If separate components, the protrusion member 108 maybe mounted to the base portion 104 via at least one of one or more snaps, a snap or interference fit, mechanical fasteners, an adhesive, or any other suitable attachment means. For example, as shown in FIG. 10, the protrusion member 108 and the base portion 104 are illustrated as separate components that can be joined together using a snap fit created by corresponding connecting features 105. In further embodiments, the protrusion member 108 and the base portion 104 may be joined together using a combination of attachment means, e.g. a snap fit and an adhesive.

In additional embodiments, the use of injection molding allows for the production of very thin edges 106 of the base portion 104 so as to reduce aerodynamic disturbance and eliminate any benefit or need for an adhesive or sealant around a periphery thereof for airflow reasons. For example, as shown in FIGS. 3 and 4, a periphery of the injection-molded vortex generator 102 may define a periphery edge 106 having a thickness equal to or less than 1 millimeter (mm). In further embodiments, as shown in FIG. 9, the thin-edge base portions 104 can be further curved downward to ensure ideal contact with one or more blade surfaces and shape.

Referring now to FIG. 11, the protrusion member 108 of the vortex generator 102 may further include one or more slits 126 or slots configured therein to enhance flexibility thereof. More specifically, the slits or slots may extend entirely through the protrusion member 108 of the vortex generator 102 or only partially through the protrusion member 108. In addition, as shown, the slits 126 may be filled with a filler material, such as an adhesive as described herein, so as to maintain the aerodynamic properties of the protrusion member 108.

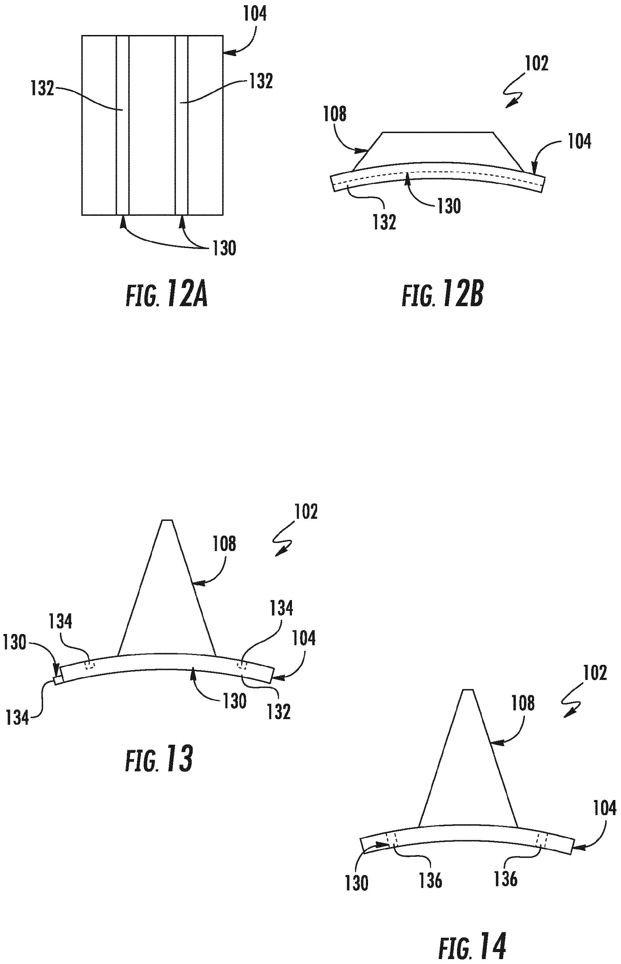

In further embodiments, as shown in FIGS. 12-16, the vortex generator(s) 102 of the present disclosure may also include at least one adhesive application feature 130. For example, as shown in FIG. 12, the adhesive application feature 130 may include one or more flow channels 132 configured with the base portion 104 of the vortex generator 102 so as to promote and/or direct adhesive flow. More specifically, as shown in FIG. 12(A), a bottom-side of the base portion 104 is illustrated that includes two flow channels 132 configured longitudinally therein. Further, FIG. 12(B) illustrates a side view of the flow channel 132. It should be understood that any number of flow channels 132 may be included in the base portion 104 of the vortex generator 102 and may extend in any suitable direction.

In addition, as shown in FIG. 13, the adhesive application feature(s) 130 may include one or more resin or injection ports 134 configured with the base portion 104 of the vortex generator 102 so as to allow injection of an adhesive. More specifically, as shown, the resin ports 134 may be configured at any suitable location on the base portion 104 including the top of the base portion 104 as well as the sides of the base portion 104. As such, the resin port(s) 134 provide an easily accessible location (e.g. typically exterior of the base portion 104) for adhesive injection that allows adhesive to be inserted therethrough and flow through one or more of the flow channels 132.

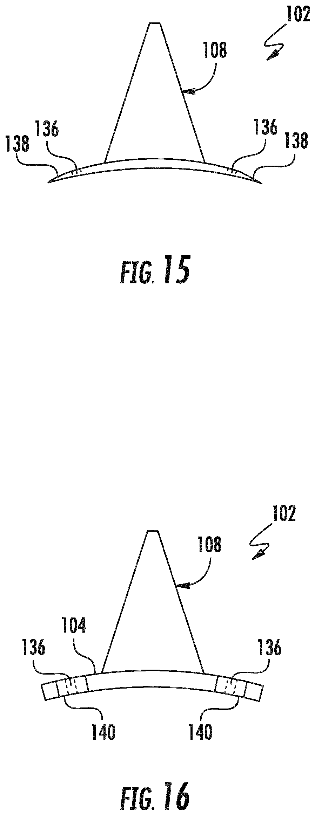

Further, as shown in FIGS. 14-16, the adhesive application feature(s) 130 may include one or more weep holes 136 so as to provide a visual indicator that sufficient adhesive has been applied to the blade surface. For example, as shown, the weep holes 136 may be through holes extending through the thickness of the base portion 104. In addition, as shown in FIG. 15, the weep holes may be configured at thin areas 138 or edges of the base portion 104 such that an adhesive can be easily viewed through the base portion 104. As such, a user can visual detect when a sufficient amount of adhesive has been applied. Further, as shown in FIG. 16, the base portion 104 maybe formed with more or more inserts 140 of a transparent material. As such, the weep holes 136 may be configured or infused with the inserts 140 such that a user can visually detect when a sufficient amount of adhesive has been applied through the transparent material. Moreover, as shown, the weep holes 136 may be evenly spaced randomly spaced and may be any suitable size and/or shape. In addition, any suitable number of weep holes 136 may be utilized and may depend upon the size and/or shape of the base portion 104 of the vortex generator 102.

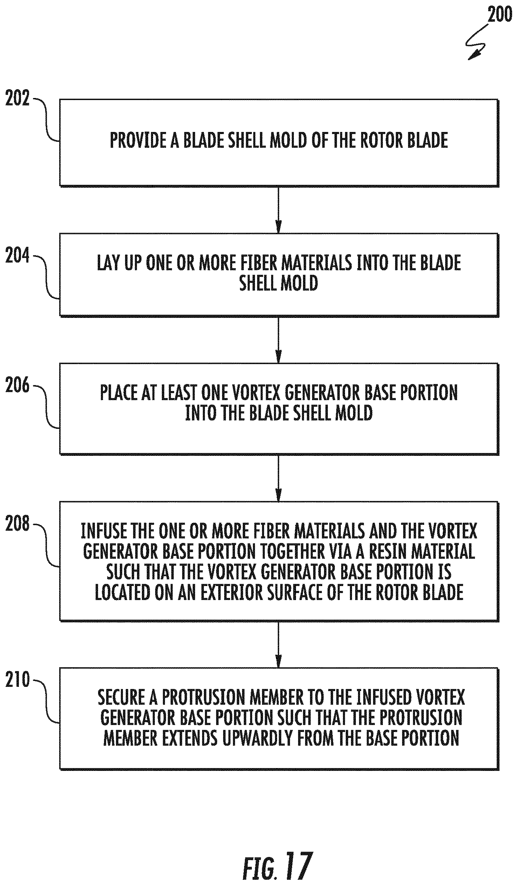

Referring now to FIG. 17, a flow diagram of one embodiment of a method for manufacturing a rotor blade, e.g. such as the rotor blade 16 of FIG. 2. As shown at 202, the method 200 includes providing a blade shell mold of the rotor blade 16. For example, in one embodiment, the blade shell mold may include two blade halves. As shown at 204, the method 200 includes laying up one or more fiber materials into the blade shell mold and placing at least one injection-molded vortex generator base portion 104 into the blade shell mold. The fiber material(s) as described herein may include but are not limited to glass fibers, carbon fibers, metal fibers, polymer fibers, ceramic fibers, nanofibers, or similar, or any combinations thereof. As shown at 206, the method 200 also includes infusing the one or more fiber materials and the vortex generator base portion 104 together via a resin material so as to form the rotor blade 16 such that the vortex generator base portion 104 is located on an exterior surface of the rotor blade 16. As shown at 208, the method 200 further includes securing a protrusion member 108 to the infused vortex generator base portion 104 such that the protrusion member 108 extends upwardly from the base portion 104. For example, in one embodiment, the protrusion member 108 may be secured to the infused vortex generator base portion 104 via at least one of one or more snaps, a snap or interference fit, one or more mechanical fasteners, an adhesive, or any other suitable attachment means, or combinations thereof.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims.

## Claims

1. A vortex generator (102) configured for mounting to either of a suction side (24) or a pressure side (22) of a rotor blade (16), the vortex generator (102) comprising;
a base portion (104) comprising a curvature in an uninstalled state that substantially aligns with or conforms to a contour of a plurality of locations on either of the suction side (24) or the pressure side (22) of the rotor blade (16);
a protrusion member (108) extending upwardly from the base portion (104), the protrusion member (108) comprising a plurality of tines separated by at least one slit (126), the base portion (104) and the protrusion member (108) being constructed of a rigid material; **characterized in that** the vortex generator further comprises: a flexible coating material that completely surrounds the base portion (104) and the protrusion member (108) and that is configured at least partially within or around the at least one slit (126).

2. The vortex generator (102) of any preceding claim, wherein the flexible coating material comprises a hardness of from about 30 Shore A to about 105 Shore A.

3. The vortex generator (102) of any preceding claim, wherein the flexible coating material comprises at least one of a thermoplastic material, a thermoset material, or a rubber.

4. The vortex generator (102) of any preceding claim, wherein the rigid material comprises a hardness of greater than about 105 Shore A.

5. The vortex generator (102) of any preceding claim, wherein a periphery of the vortex generator (102) comprises an edge (106) having a thickness equal to or less than 1 millimeter (mm).

6. The vortex generator (102) of claim 5, wherein the edge (106) of the injection-molded vortex generator (102) curves downward.

7. The vortex generator (102) of any preceding claim, further comprising at least one adhesive application feature (130), the adhesive application feature (130) comprising at least one of one or more flow channels (132) configured with the base portion (104) so as to promote adhesive flow, one or more resin ports (134) configured to allow injection of an adhesive, or one or more weep holes (136) configured to provide a visual indicator that sufficient adhesive has been applied.

8. The vortex generator (102) of any preceding claims, further comprising an attachment layer (110) configured to connect the base portion (104) to the suction side (24) or the pressure side (22) of the rotor blade (16).

9. A rotor blade assembly (100) for a wind turbine (10), comprising:
a rotor blade (16) having surfaces defining a pressure side (22), a suction side (24), a leading edge, and a trailing edge extending between a tip and a blade root; and
at least one injection-molded vortex generator (102) as defined by any preceding claims mounted to either of the suction side (24) or the pressure side (22) of the rotor blade (16).

10. The rotor blade assembly (100) of claim 9, wherein the base portion (104) and the protrusion member (108) are constructed of a single polymer material.

11. The rotor blade assembly (100) of claims 9 or 10, comprising a plurality of vortex generators (102) arranged in pairs to define generally v-shaped formations oriented towards a leading edge of the rotor blade (16).

12. The rotor blade assembly (100) of claims 9, 10 or 11, wherein each respective vortex generator (102) has a size and/or configuration that is dependent on its spanwise location on the rotor blade (16).

13. The rotor blade assembly (100) of claims 9, 10, 11 or 12, wherein the vortex generator (102) further comprises at least one adhesive application feature (130), the adhesive application feature (130) comprising at least one of one or more flow channels (132) configured with the base portion (104) so as to promote adhesive flow, one or more resin ports (134) configured to allow injection of an adhesive, or one or more weep holes (136) configured to provide a visual indicator that sufficient adhesive has been applied.

14. A method (200) for manufacturing a rotor blade (16), the method (200) comprising:
providing a blade shell mold of the rotor blade (16);
laying up one or more fiber materials into the blade shell mold;
placing at least one vortex generator (102) base portion (104) of a vortex generator (102) as defined by any of claims 1 to 8 into the blade shell mold;
infusing the one or more fiber materials and the vortex generator (102) base portion (104) together via a resin material so as to form the rotor blade (16) with the vortex generator (102) base portion (104) located on an exterior surface of the rotor blade (16); and
securing a protrusion member (108) to the infused vortex generator (102) base portion (104) such that the protrusion member (108) extends upwardly from the base portion (104).

## Patentansprüche

1. Wirbelgenerator (102), konfiguriert zum Montieren an entweder einer Saugseite (24) oder einer Druckseite (22) eines Rotorblatss (16), wobei der Wirbelgenerator (102) umfasst:
einen Basisabschnitt (104), der in einem nicht installierten Zustand eine Krümmung aufweist, die im Wesentlichen an einer Kontur mehrerer Stellen auf entweder der Saugseite (24) oder der Druckseite (22) des Rotorblatts (16) ausgerichtet ist oder dieser entspricht;
ein Vorsprungselement (108), das sich von dem Basisabschnitt (104) nach oben erstreckt, wobei das Vorsprungselement (108) mehrere Zinken umfasst, die durch mindestens einen Schlitz (126) getrennt sind, und der Basisabschnitt (104) und das Vorsprungselement (108) aus einem starren Material aufgebaut sind; **dadurch gekennzeichnet, dass** der Wirbelgenerator ferner umfasst:
ein flexibles Beschichtungsmaterial, das den Basisabschnitt (104) und das Vorsprungselement (108) vollständig umgibt und das zumindest teilweise innerhalb oder um den mindestens einen Schlitz (126) herum angeordnet ist.

2. Wirbelgenerator (102) nach einem der vorhergehenden Ansprüche, wobei das flexible Beschichtungsmaterial eine Härte von etwa 30 Shore A bis etwa 105 Shore A aufweist.

3. Wirbelgenerator (102) nach einem der vorhergehenden Ansprüche, wobei das flexible Beschichtungsmaterial ein thermoplastisches Material, ein duroplastisches Material und/oder ein Gummi umfasst.

4. Wirbelgenerator (102) nach einem der vorhergehenden Ansprüche, wobei das starre Material eine Härte von mehr als etwa 105 Shore A aufweist.

5. Wirbelgenerator (102) nach einem der vorhergehenden Ansprüche, wobei ein Umfang des Wirbelgenerators (102) eine Kante (106) mit einer Dicke von 1 Millimeter (mm) oder weniger aufweist.

6. Wirbelgenerator (102) nach Anspruch 5, wobei die Kante (106) des spritzgegossenen Wirbelgenerators (102) nach unten gekrümmt ist.

7. Wirbelgenerator (102) nach einem der vorhergehenden Ansprüche, ferner umfassend mindestens ein Klebstoffauftragsmerkmal (130), wobei das Klebstoffauftragsmerkmal (130) einen oder mehrere Strömungskanäle (132), die mit dem Basisabschnitt (104) konfiguriert sind, um Klebstofffluss zu fördern, eine oder mehrere Harzöffnungen (134), die konfiguriert sind, um Einspritzen eines Klebstoffs zu ermöglichen, und/oder ein oder mehrere Sickerlöcher (136) umfasst, die konfiguriert sind, um einen visuellen Indikator dafür bereitzustellen, dass ausreichend Klebstoff aufgetragen wurde.

8. Wirbelgenerator (102) nach einem der vorhergehenden Ansprüche, ferner umfassend eine Befestigungsschicht (110), die konfiguriert ist, um den Basisabschnitt (104) mit der Saugseite (24) oder der Druckseite (22) des Rotorblatts (16) zu verbinden.

9. Rotorblattanordnung (100) für eine Windturbine (10), umfassend:
ein Rotorblatt (16) mit Oberflächen, die eine Druckseite (22), eine Saugseite (24), eine Vorderkante und eine Hinterkante definieren, die sich zwischen einer Spitze und einer Schaufelwurzel erstrecken; und
mindestens einen spritzgegossenen Wirbelgenerator (102) nach einem der vorhergehenden Ansprüche, der entweder an der Saugseite (24) oder an der Druckseite (22) des Rotorblatts (16) angebracht ist.

10. Rotorblattanordnung (100) nach Anspruch 9, wobei der Basisabschnitt (104) und das Vorsprungselement (108) aus einem einzigen Polymermaterial aufgebaut sind.

11. Rotorblattanordnung (100) nach Anspruch 9 oder 10, umfassend mehrere Wirbelgeneratoren (102), die paarweise angeordnet sind, um allgemein v-förmige Formationen zu definieren, die auf eine Vorderkante des Rotorblatts (16) ausgerichtet sind.

12. Rotorblattanordnung (100) nach Anspruch 9, 10 oder 11, wobei jeder jeweilige Wirbelgenerator (102) eine Größe und/oder Konfiguration aufweist, die von seiner Position in Spannweitenrichtung auf des Rotorblatts (16) abhängt.

13. Rotorblattanordnung (100) nach Anspruch 9, 10, 11 oder 12, wobei der Wirbelgenerator (102) ferner mindestens ein Klebstoffauftragsmerkmal (130) umfasst, wobei das Klebstoffauftragsmerkmal (130) einen oder mehrere Strömungskanäle (132), die mit dem Basisabschnitt (104) konfiguriert sind, um Klebstofffluss zu fördern, eine oder mehrere Harzöffnungen (134), die konfiguriert sind, um Einspritzen eines Klebstoffs zu ermöglichen, und/oder ein oder mehrere Sickerlöcher (136), die konfiguriert sind, um einen visuellen Indikator dafür bereitzustellen, dass ausreichend Klebstoff aufgetragen wurde.

14. Verfahren (200) zur Herstellung eines Rotorblatts (16), wobei das Verfahren (200) umfasst:
Bereitstellen einer Schaufelschalenform des Rotorblatts (16);
Auflegen eines oder mehrerer Fasermaterialien in die Schaufelschalenform;
Einbringen mindestens eines Basisabschnitts (104) eines Wirbelgenerators (102) nach einem der Ansprüche 1 bis 8 in die Schaufelschalenform;
gemeinsames Tränken des einen oder der mehreren Fasermaterialien und des Basisabschnitts (104) des Wirbelgenerators (102) mit einem Harzmaterial, um die Rotorblatt (16) derart zu bilden, dass der Basisabschnitt (104) des Wirbelgenerators (102) an einer Außenfläche des Rotorblatts (16) angeordnet ist; und
Fixieren eines Vorsprungselements (108) an dem durchtränkten Basisabschnitt (104) des Wirbelgenerators (102) derart, dass sich das Vorsprungselement (108) von dem Basisabschnitt (104) nach oben erstreckt.

## Revendications

1. Générateur de vortex (102) configuré pour être monté soit sur un extrados (24), soit sur un intrados (22) d'une pale de rotor (16), le générateur de vortex (102) comprenant;
une partie de base (104) comprenant une courbure dans un état désinstallé qui s'aligne sensiblement avec ou se conforme au contour d'une pluralité d'emplacements sur l'extrados (24) ou l'intrados (22) de la pale de rotor (16);
un élément saillant (108) s'étendant vers le haut depuis la partie de base (104), l'élément saillant (108) comprenant une pluralité de dents séparées par au moins une fente (126), la partie de base (104) et l'élément saillant (108) étant constitués d'un matériau rigide; **caractérisé en ce que** le générateur de vortex comprend en outre:
un matériau de revêtement flexible qui entoure complètement la partie de base (104) et l'élément saillant (108) et qui est configuré au moins partiellement à l'intérieur ou autour de l'au moins une fente (126).

2. Générateur de vortex (102) selon l'une quelconque des revendications précédentes, dans lequel le matériau de revêtement flexible comprend une dureté d'environ 30 Shore A à environ 105 Shore A.

3. Générateur de vortex (102) selon l'une quelconque des revendications précédentes, dans lequel le matériau de revêtement flexible comprend au moins un matériau parmi un matériau thermoplastique, un matériau thermodurci ou un caoutchouc.

4. Générateur de vortex (102) selon l'une quelconque des revendications précédentes, dans lequel le matériau rigide comprend une dureté supérieure à environ 105 Shore A.

5. Générateur de vortex (102) selon l'une quelconque des revendications précédentes, dans lequel la périphérie du générateur de vortex (102) comprend un bord (106) ayant une épaisseur inférieure ou égale à 1 millimètre (mm).

6. Générateur de vortex (102) selon la revendication 5, dans lequel le bord (106) du générateur de vortex (102) moulé par injection se courbe vers le bas.

7. Générateur de vortex (102) selon l'une quelconque des revendications précédentes, comprenant en outre au moins un élément d'application d'adhésif (130), l'élément d'application d'adhésif (130) comprenant au moins un canal d'un ou plusieurs canaux d'écoulement (132) configurés avec la partie de base (104) afin de favoriser l'écoulement de l'adhésif, un ou plusieurs orifices de résine (134) configurés pour permettre l'injection d'un adhésif, ou un ou plusieurs trous d'évacuation (136) configurés pour fournir un indicateur visuel qu'une quantité suffisante d'adhésif a été appliquée.

8. Générateur de vortex (102) selon l'une quelconque des revendications précédentes, comprenant en outre une couche de fixation (110) configurée pour connecter la partie de base (104) a l'extrados (24) ou a l'intrados (22) de la pale de rotor (16).

9. Ensemble de pale de rotor (100) pour une éolienne (10), comprenant:
une pale de rotor (16) ayant des surfaces définissant un intrados (22), un extrados (24), un bord d'attaque et un bord de fuite s'étendant entre une pointe et un pied de pale; et
au moins un générateur de vortex (102) moulé par injection tel que défini par l'une quelconque des revendications précédentes, monté soit de l'extrados (24), soit de l'intrados (22) de la pale de rotor (16).

10. Ensemble de pale de rotor (100) selon la revendication 9, dans lequel la partie de base (104) et l'élément saillant (108) sont constitués d'un seul matériau polymère.

11. Ensemble de pale de rotor (100) selon la revendication 9 ou 10, comprenant une pluralité de générateurs de vortex (102) disposés par paires pour définir des formations généralement en forme de V orientées vers le bord d'attaque de la pale de rotor (16).

12. Ensemble de pale de rotor (100) selon les revendications 9, 10 ou 11, dans lequel chaque générateur de vortex (102) respectif a une taille et/ou une configuration qui dépend de son emplacement dans le sens de l'envergure sur la pale de rotor (16).

13. Ensemble de pale de rotor (100) selon les revendications 9, 10, 11 ou 12, dans lequel le générateur de vortex (102) comprend en outre au moins un élément d'application d'adhésif (130), l'élément d'application d'adhésif (130) comprenant au moins un canal parmi un ou plusieurs canaux d'écoulement (132) configurés avec la partie de base (104) de manière à favoriser l'écoulement d'adhésif, un ou plusieurs orifices de résine (134) configurés pour permettre l'injection d'un adhésif, ou un ou plusieurs trous d'évacuation (136) configurés pour fournir un indicateur visuel qu'une quantité suffisante d'adhésif a été appliquée.

14. Procédé (200) de fabrication d'une pale de rotor (16), le procédé (200) comprenant :
la fourniture d'un moule de coque de pale de la pale de rotor (16) ;
le dépôt d'un ou plusieurs matériaux fibreux dans le moule de coque de pale ;
le placement d'au moins une partie de base (104) de générateur de vortex (102) d'un générateur de vortex (102) tel que défini par l'une quelconque des revendications 1 à 8 dans le moule de coque de pale ;
l'imprégnation d'un ou plusieurs matériaux fibreux et de la partie de base (104) du générateur de vortex (102) conjointement via un matériau de résine de manière à former la pale de rotor (16) avec la partie de base (104) du générateur de vortex (102) située sur la surface extérieure de la pale de rotor (16) ; et
la fixation d'un élément saillant (108) à la partie de base (104) imprégnée du générateur de vortex (102) de telle sorte que l'élément saillant (108) s'étende vers le haut depuis la partie de base (104).
